Europäisches Patentamt

European Patent Office

Office européen des brevets

(19)

(11) Publication number: **0 393 204**
**A1**

(12)

# EUROPEAN PATENT APPLICATION
## published in accordance with Art. 158(3) EPC

(21) Application number: 89910672.8

(22) Date of filing: 26.09.89

(86) International application number:
PCT/JP89/00974

(87) International publication number:
**WO 90/03269 (05.04.90 90/08)**

(51) Int. Cl.5: **B32B 27/34, B32B 1/02,**
**B29C 49/22, B60K 15/02,**
**//B29K77/00,B29L22/00**

(30) Priority: 26.09.88 JP 238795/88

(43) Date of publication of application:
**24.10.90 Bulletin 90/43**

(84) Designated Contracting States:
**AT BE CH DE FR GB IT LI LU NL SE**

(71) Applicant: **TONEN SEKIYUKAGAKU K.K.**
**1-1, Tsukiji, 4-Chome**
**Chuo-Ku Tokyo 104(JP)**

(72) Inventor: **TAKADO, Yutaka Tonen**
**Sekiyukagaku K.K.**
**Technical Development Center 3-1,**
**Chidori-cho**
**Kawasaki-ku Kawasaki-shi Kanagawa 210(JP)**
Inventor: **NAKASATO, Toshikazu Tonen**
**Sekiyukagaku K.K.**
**Technical Development Center 3-1,**
**Chidori-cho**
**Kawasaki-ku, Kawasaki-shi Kanagawa 210(JP)**
Inventor: **NOGATA, Tetsuro Tonen**
**Sekiyukagaku K.K.**
**Technical Developement Center 3-1,**
**Chidori-cho**
**Kawasaki-ku, Kawasaki-shi Kanagawa 210(JP)**

(74) Representative: **Perry, Robert Edward et al**
**GILL JENNINGS & EVERY 53-64 Chancery Lane**
**London WC2A 1HN(GB)**

(54) **PLASTIC FUEL TANK.**

(57) This invention relates to a plastic fuel tank produced by blow-molding a multi-layer parison including a polyamide layer as a barrier layer for limiting permeation of a fuel, and the polyamide layer consists of a polyamide type resin having an elongation at break of at least 100 % at -40°C, a bending modulus of up to 5,000 kg/cm$^2$ at 23°C absolute dry time and a gasoline permeability of up to 1 x 10$^{-5}$ g/m.hr (at 30°C absolute dry time). The tank has high barrier property and excellent impact character-

istics at low temperature, is free from peel between layers, and has high strength and high durability. None of the conventional plastic fuel tanks have all of these various excellent characteristics, because they may have a good barrier property but a poor impact characteristic.

FIG. 1

DESCRIPTION

Title of Invention

Plastic Fuel Tank

Technical Field

The present invention relates to a blow molded vessel which is one of the fields of multilayer blow moldings, more particularly to a fuel tank for a vehicle or the like.

Background Art

Fuel tanks for automobiles have been molded using plastics. For the molding, blow molding techniques are generally used. In general, a cylindrical parison is extruded through a parison die in its softened state, and then upper and lower end portions of the parison are put between molds by closing the molds to close the upper end portion thereof by adhesion, whereas the lower end portion thereof is bonded, leaving an air suction opening disposed in the parison. Then, air is supplied from a pressurized air supply source connected to this air suction opening into the parison to blow up the parison along an inner configuration of the molds.

Previously, monolayer blow moldings have been widely used as blow moldings. However, in recent years, multilayer blow moldings are also proposed. A fuel tank produced by the multiple blow molding using different types of plastic materials is provided with a barrier layer, in order to prevent gasoline and the like from passing through. As the

1

barrier layer, a nylon layer (polyamide layer) has been used. For instance, an example is a multilayer blow molding composed of the polyamide layer as the barrier layer, modified polyethylene as an intermediate layer (adhesive layer) and polyethylene as an outer layer. Further, another example is a three-kind five-layer plastic fuel tank composed of a high density polyethylene layer, an adhesive layer, the polyamide layer (barrier layer), an adhesive layer and a high density polyethylene layer which are arranged from an outer layer to an inner layer in this order (Japanese Patent Unexamined Publication Nos. 58-220738, 62-110526, 57-45034, 61-249736 and 61-171320).

However, the tank concerned must not leak gasoline and the like outside. Although, in a prior-art embodiment, an inner surface treatment of the tank has also been carried out to prevent their leakage, the use of nylons has been proposed to decrease the number of manufacturing steps as described above. However, the nylons themselves have a problem in barrier properties too.

Further, it is required for the tank concerned to be excellent in impact resistance at low temperatures. The impact resistance can be improved by blending ionomers or polyolefinic resins with the nylons. In this case, however, though the impact resistance can be improved, the barrier properties are deteriorated.

Furthermore, there is a problem also in the adhesive strength between the nylon layer and the adhesive layer. If

2

the adhesive strength is not good, the separation is liable to take place by long-term contact with gasoline, which results in lack of the durability of the tank.

Accordingly, there have been proposed the multilayer blow-molded plastic tank containing the polyamide layer as the barrier layer. However, it is difficult to have both the impact resistance at low temperatures and the barrier properties. In particular, the prior-art blow-molded tank described above has a problem in impact resistance at low temperatures, and hence has not yet come in practice in the present state.

It is therefore an object of the present invention to provide a technique to give both the impact resistance at low temperatures and the barrier properties, to improve the impact resistance at low temperatures, and not to deteriorate the barrier properties.

Other objects and novel features of the present invention will become apparent from the whole description of this specification.

Disclosure of Invention

The present invention in order to achieve such object provides a plastic fuel tank produced by blow molding a multilayer parison containing a polyamide layer as a barrier layer to prevent a fuel from permeating, which is characterized by that said polyamide layer is formed of a polyamide resin having a tensile breaking elongation at - 40°C of at least 100%, a bending elastic modulus in an

3

absolute dry condition at 23$^{\circ}$C of not more than 5,000 kg/cm$^2$ and a gasoline permeability (in an absolute dry condition at 30$^{\circ}$C) of not more than 1 X 10$^{-5}$ g/m·hr.

As described above, the prior-art tank concerned is provided with the barrier properties, but is low in impact resistance at low temperatures, and hence there has been no tank having all of these various properties. In accordance with the present invention, however, the plastic fuel tank could be obtained which is good in barrier properties and in impact resistance at low temperatures, does not induce the separation between the respective layers, is high in strength, and is excellent in durability.

The polyamide resin constituting the barrier layer in the present invention is required to have a tensile breaking elongation at -40$^{\circ}$C of at least 100%, a bending elastic modulus in an absolute dry condition at 23$^{\circ}$C of not more than 5,000 kg/cm$^2$ and a gasoline permeability (in an absolute dry condition at 30$^{\circ}$C) of not more than 1 X 10$^{-5}$ g/m·hr. Each of these requirements is indispensable. Lacking even one of these requirements, the multilayer blow-molded plastic tank having both the impact resistance at low temperatures and the barrier properties can not be obtained. Namely, even if the above tensile breaking elongation is at least 100%, the above bending elastic modulus is not more than 5,000 kg/cm$^2$ and therefore the impact property at low temperatures is excellent, the departure of the gasoline barrier property from the above-mentioned range causes the

4

lack of the barrier properties. This brings about the leakage of the contents of the tank, such as gasoline, which results in a practical hindrance. Further, even if the gasoline barrier property is not more than $1 \times 10^{-5}$ g/m·hr, which is within the above-mentioned range, in case that the above tensile breaking elongation and bending elastic modulus depart from the above-mentioned range, the impact property at low temperatures is inferior in spite of the superior gasoline barrier property, which results in a practical hindrance.

The above tensile breaking elongation is at least 100%, preferably from 100 to 450%.

The above bending elastic modulus is not more than 5,000 kg/cm$^2$, preferably from 2,000 to 5,000 kg/cm$^2$.

The above gasoline barrier property is not more than 1 $\times 10^{-5}$ g/m·hr, preferably not more than $0.5 \times 10^{-5}$ g/m·hr.

Commercially available polyamides such as EMSR47w40 (trade name, manufactured by Emsinventor Co.) may be used as the above polyamide.

The multilayer parison in the present invention contains the polyamide layer formed of the polyamide resin having the above-mentioned properties as the barrier layer. The polyamide layer may be disposed so as to directly come into contact with the contents such as gasoline and the like. It is preferable, however, to arrange the polyamide layer as an inner layer.

Examples of the preferred structures of the above multilayer parisons include the following:

(1) High density polyethylene layer (HDPE)/adhesive layer (CMP)/polyamide layer described above/CMP/HDPE

(2) HDPE/CMP/polyamide described above/CMP/regenerated burr material layer

(3) HDPE/CMP/polyamide layer described above/layer of alloy of polyamide described above and HDPE

In the above, as the adhesive layer (CMP) is exemplified a modified-polyethylene layer. The modified polyethylene can be obtained, for example, by the graft reaction of an unsaturated carboxylic acid or a derivative thereof such as an anhydride with polyethylene, or by the copolymerization of the above acid or the derivative thereof and polyethylene.

The regenerated burr material layer is formed of a material obtained by recovering burrs produced in blow molding.

As the alloy layer of a polyamide and HDPE is exemplified a composite plastic prepared by incorporating high density polyethylene or the high density polyethylene modified as described above in the above polyamide in the present invention. Hereupon, it is preferable that the mixing ratio of the polyethylene (including the modified one) is within the range of 1 to 50% by weight.

In the above, the case in which HDPE is used is particularly exemplified from the viewpoint of the barrier properties. However, there may be used other polyolefinic

6

resins such as polypropylene and copolymers of ethylene and propylene. Further, there may be used, of course, other multilayer structures, for example, a three layer structure such as HDPE/CMP/polyamide layer.

Brief Description of Drawings

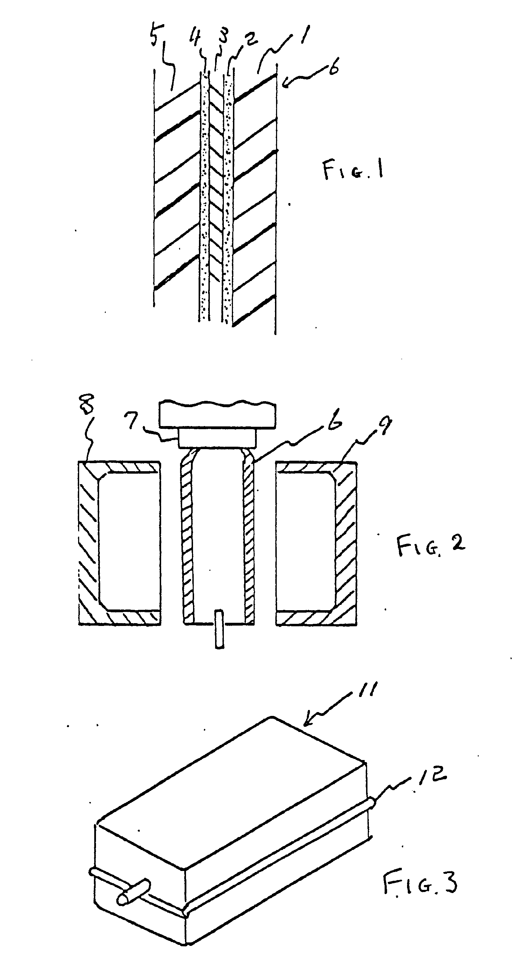

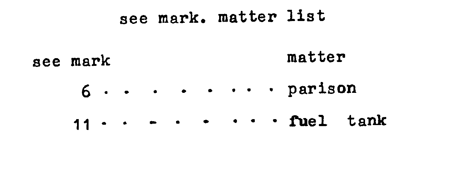

Fig. 1 is a cross sectional view of the structure of a parison showing an embodiment of the present invention; Fig. 2 is an illustrative view of an example step according to the present invention; and Fig. 3 is a perspective view of a fuel tank showing an embodiment of the present invention.

Best Mode for Carrying Out the Invention

Plastic tanks of the present invention can be obtained by blow molding multilayer parisons according to methods known in the art.

For example, a parison 6 having a cross sectional structure in which an outermost layer 1 formed of HDPE, a CMP adhesive layer 2, a polyamide layer 3 according to the present invention, a CMP adhesive layer 4 and an innermost layer 5 formed of HDPE are bonded to one another as exemplified in Fig. 1 is extruded through a parison die 7 as exemplified in Fig. 2. Then, upper and lower end portions of the parison 6 are put between molds 8 an 9 by closing the molds to close the upper end portion thereof by adhesion, whereas the lower end portion thereof is bonded, leaving an air suction opening 10 disposed in the parison. Air is thereafter blown from the air suction opening 10 to blow up the parison 6 along an inner surface of the molds 8 and 9, thereby obtaining a fuel tank 11 as shown in Fig. 3.

The tank 11 has a pinch off portion 12 formed by closing the molds 8 and 9.

The thickness constitution of each layer of the plastic tanks in the present invention is described according to the preferred structures of the above multilayer parisons as follows.

Namely, it is preferable that the HDPE is 1.0 to 10 mm (per layer, and so forth) in its average thickness, the CMP is 0.01 to 2.0 mm in its average thickness, the polyamide layer is 0.01 to 2.0 mm in its average thickness, the regenerated burr material layer is 0.10 to 10 mm in its average thickness, and the alloy layer is 0.01 to 10 mm in its average thickness.

Examples of the present invention will hereinafter be shown together with comparative examples.

Example 1 and Comparative Examples 1 and 2

A 1000 ml hollow vessel having a layer constitution of three kinds and five layers shown in Table 1 was produced by a three-kind five-layer hollow molding machine.

Table 1

|  | Material | Thickness (mm) |
|---|---|---|
| Outer layer | HDPE | 0.98 |
| Adhesive layer | Acid-modified HDPE | 0.15 |
| Barrier layer | Various nylons | 0.24 |
| Adhesive layer | Acid-modified HDPE | 0.15 |
| Inner layer | HDPE | 0.98 |

The measured properties of the various nylons used for constituting the barrier layer in the above are shown in Table 2.

Table 2

| Kind of Nylon (Grade) | 235°C MFR | (23°C) Bending Elastic Modulus (Absolute Dry) ($kg/cm^2$) | (kg/cm$^2$) Tensile Yield Strength (23°C)/(-40°C) |
|---|---|---|---|
| Nylon (A) (Comparative) | 2.5 | 25500 | 820/No yielding point |
| Nylon (B) (Comparative) | 0.37 | 18000 | 450/No yielding point |
| Nylon (C)* | 0.25 | 33000 | No yielding/806 point |

| (%) Tensile Breaking Elongation (23°C/-40°C) | (g/m/hr) Gasoline Permeability |
|---|---|
| 140/20 | $0.078 \times 10^{-5}$ |
| 150/15 | $26.90 \times 10^{-5}$ |
| 313/151 | $0.290 \times 10^{-5}$ |

* This invention (EMSR47W40 manufactured by Emsinventor Co.)

The results are as shown in Table 3.

Comparative Example 3

A 1000 ml hollow vessel consisting of the single substance of HDPE (density: 0.945, M: 10.03 g/10 minutes) was produced by a hollow molding machine. The gasoline permeability was 110.93 X $10^{-5}$ g/m.hr.

The results are as shown in Table 3.

Table 3

| EXample No. | Layer Constitution | Bending Elastic Modulus (23°C) ($kg/cm^2$) | Tensile Yielding Strength ($kg/cm^2$) (23°C)/(-40°C) |
|---|---|---|---|
| Comparative Example 1 | HDPE/CMP/Nylon(A) /CMP/HDPE | 12000 | 290/550 |
| Comparative Example 2 | HDPE/CMP/Nylon(B) /CMP/HDPE | 12000 | 270/510 |
| | | | Each layer separated |
| Comparative Example 3 | Single substance of HDPE | 12000 | 260/470 |
| Example 1 | HDPE/CMP/Nylon(C) /CMP/HDPE | 12000 | 260/500 |

| Tensile Breaking Elongation ($kg/cm^2$) (23°C)/(-40°C) | Tensile Impact Strength ($kg\ cm/cm^2$) (23°C)/(-40°C) | Adhesive Property | Gasoline Permeability (g/m/hr) Amount |
|---|---|---|---|
| 240/20 | 188/105 | O | (0.47) 0.77X$10^{-5}$ |
| 150/25 | 209/173 | X | (51.12) 84.52X$10^{-5}$ |
| Each layer separated | | | |
| 1000/450 | 195/175 | – | (67.09) 110.92X$10^{-5}$ |
| 180/120 | 179/145 | O | (1.71) 2.82X$10^{-5}$ |

Methods for measuring the properties

Gasoline permeability: In a JIS 1 1 bottle [five layers, a thickness of 1 mm (HDPE/CMP/PA/CMP/HDPE = 380/70/100/70/380 microns)] was weighed 400 g of regular gasoline, and allowed to stand at 30°C and 1 atm for 5 weeks. Its weight loss was taken as a permeation amount of gasoline. The gasoline permeability g/m hr was calculated from this permeation amount.

Bending elastic modulus: ASTM D747-1976

Tensile yielding strength: ASTM D1822-1968

Tensile breaking elongation: ASTM D1822-1968

Tensile impact strength: JIS K7113-1981

From Table 3 shown above, the vessel using the nylon (B) is poor in adhesive property and the layer separation takes place. Hence, this vessel can not resist long-term immersion in gasoline.

The vessel using the nylon (A) is good in the above adhesive property, but the tensile breaking elongation at a low temperature (-40°C) is 20 kg/cm$^2$, which is markedly inferior to that of the example of the present invention. The example of the present invention is good in the above adhesive property, and high in this tensile breaking elongation and also in tensile impact strength.

Example 2 and Comparative Example 4

A multilayer fuel tank (PFT) was produced by a large-sized multilayer blow molding machine, employing the nylon (A) and the nylon (B) used above.

The size of the sample, the layer constitution and the thickness ratio were as follows:

(1) Capacity of tank; 60 l

11

(2) Tank

L (length) X W (width) X H (height);

700 X 350 X 200 (mm)

(3) Average thickness; 4.0 mm

(4) Layer constitution and thickness ratio;

Outside                                          Inside
←——                                              ——→
 HDPE   :   CMP   : each nylon :   CMP   :  HD
0.73 mm  0.15 mm    0.24 mm      0.15 mm  1.73 mm

For each of the resulting tanks, the low-temperature drop impact test was carried out. The test conditions were as follows:

Temperature; $-40^{\circ}$C

Weight; about 70 kg

Height of drop and position; 6 m, L direction, w

direction, H direction

The results are shown in Table 4.

The results in the table were determined from the average values (n = 5) from five measurements. In the table, O indicates no damage, and X indicates the occurrence of damage and leakage of liquid contents.

Table 4

| Example No. | Sample | Drop Position | | |
| | | L direction | W direction | H direction |
|---|---|---|---|---|
| Comparative Example 4 | 5 layers | X | O | X |
| Example 2 | EMS R47W40 used 5 layers PFT | O | O | O |

12

CLAIM


A plastic fuel tank produced by blow molding a multilayer parison containing a polyamide layer as a barrier layer to prevent a fuel from permeating, which is characterized by that said polyamide layer is formed of a polyamide resin having a tensile breaking elongation at -40°C of at least 100%, a bending elastic modulus in an absolute dry condition at 23°C of not more than 5,000 kg/cm$^2$ and a gasoline permeability (in an absolute dry condition at 30°C) of not more than 1 X 10$^{-5}$ g/m·hr.

Fig. 1

Fig. 2

Fig. 3

see mark. matter list

see mark                     matter

    6 . .   .   .   . . . parison

    11 . .   -   .   -   . . . fuel  tank

# INTERNATIONAL SEARCH REPORT

International Application No PCT/JP89/00974

## I. CLASSIFICATION OF SUBJECT MATTER (if several classification symbols apply, indicate all) 6

According to International Patent Classification (IPC) or to both National Classification and IPC

Int. Cl⁴  B32B27/34, B32B1/02, B29C49/22, B60K15/02//
B29K77:00, B29L22:00

## II. FIELDS SEARCHED

| Minimum Documentation Searched 7 | |
|---|---|
| Classification System | Classification Symbols |
| IPC | B32B27/34, B32B1/02, B29C49/22, B60K15/02, B29K77:00, B29L22:00 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 58-220738 (Nissan Motor Co., Ltd.) 22 December 1983 (22. 12. 83) Claim (Family : none) | 1 |
| A | JP, A, 61-171320 (Mazda Motor Corporation) 2 August 1986 (02. 08. 86) Claim (Family : none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 5, 1989 (05. 12. 89) | December 18, 1989 (18. 12. 89) |
| International Searching Authority | Signature of Authorized Officer |
| Japanese Patent Office | |

Form PCT/ISA/210 (second sheet) (January 1985)